# EUROPÄISCHE PATENTSCHRIFT

(11) **EP 1 878 552 B1**
(45) Veröffentlichungstag und Bekanntmachung des Hinweises auf die Patenterteilung: **07.11.2018**
(21) Anmeldenummer: 07012887.1
(22) Anmeldetag: 02.07.2007
(51) Int. Cl.: B29C 33/26, B29C 33/44, B29C 45/04, B29C 45/44, B29C 45/14, B29C 44/42, B29C 67/24, B29C 70/76

(54) **Formwerkzeug**
Moulding tool
Outil de formage

(30) Priorität: 11.07.2006 DE 202006010761 U
(43) Veröffentlichungstag der Anmeldung: 16.01.2008
(73) Patentinhaber: BBG GmbH & Co. KG, 87719 Mindelheim (DE)
(72) Erfinder: Brandner, Hans, 85221 Dachau (DE); Ludwig, Thomas, 82327 Tutzing (DE); Satzger, Bernhard, 86825-Bad Wörishofen (DE)
(74) Vertreter: Fiener, Josef

(56) Entgegenhaltungen:
- EP-A- 0 354 481
- EP-A- 1 216 808
- WO-A-98/05487
- AU-B2- 495 923
- DE-A1- 2 410 446
- DE-U1-202005 002 900
- JP-A- 58 084 740
- US-A1- 2003 017 309

## Beschreibung

Die Erfindung betrifft ein Formwerkzeug mit den oberbegrifflichen Merkmalen des Patentanspruches 1. Ein derartiges Formwerkzeug ist aus der JP 58-084740 A bekannt, wobei mehrere Schieber durch eine zentrale Kolbenstange betätigt werden und diese Elemente dabei eine translatorische Bewegung ausführen.

Formwerkzeuge, insbesondere zur Herstellung oder Weiterverarbeitung von Formteilen aus kunststoffbasierten Formmassen wie beispielsweise aus Polyurethan (PU), verfügen in der Regel über zwei verschieb- oder verschwenkbar in einem Werkzeugträger angeordnete Werkzeughälften mit geeigneten Formaufspannplatten für das jeweilige Schäum- oder Spritzgussverfahren. Derartige Werkzeuge können verwendet werden, um durch Eintrag der Formmasse in ein Formnest, einteilige Formteile herzustellen. Darüber hinaus können allerdings auch aus anderen Werkstoffen, wie beispielsweise aus Glas oder Metall bestehende Formteile mit Formmasse umspritzt oder in diese eingebettet werden. Je nach Gestaltung des Formnests können derartige Formteile in das Formnest eingelegt werden, um nach dem Schließen der Werkzeughälften, wie bei der Herstellung einteiliger Formteile, die Formmasse in das Werkzeug einzuspritzen. Nach der Aushärtung der Formmasse werden die Werkzeughälften getrennt und das entstandene Formteil aus dem Formnest entnommen. Herkömmliche Formwerkzeuge weisen dazu an den Werkzeughälften mindestens einen, im Regelfall aber zwei bis vier Schieber auf, die über Schubstangen verschoben werden, um das Formteil freizugeben. Zusätzlich verfügen viele Werkzeuge über wenigstens ein Hubelement, das das Formteil aus der Form anhebt und zur Erleichterung der Entnahme auf den Werker oder eine Entnahmevorrichtung zuführt.

Nachteil bekannter Werkzeuge ist es, dass jeder Schieber über jeweils einen hydraulischen oder pneumatischen Aktor verfügt. Da jeder Aktor einen eigenen Antrieb aufweist, sind entsprechend ausgerüstete Formwerkzeuge, insbesondere durch die zahlreichen, zur Betätigung des Aktors notwendigen Fluidschläuche und Steuermodule im Aufbau sehr komplex, zeigen hohen Platzbedarf bei der Aufstellung und verursachen zudem hohe Kosten für Wartung und Reparatur.

Aufgabe der vorliegenden Erfindung ist es daher, eine einfache, kostengünstige und wartungsarme Vorrichtung zur gleichzeitigen Steuerung der Schieber und des Hubelementes an den Werkzeughälften von Formwerkzeugen zur Verfügung zu stellen.

Diese Aufgabe wird durch ein Formwerkzeug mit den Merkmalen des Patentanspruchs 1 gelöst. Weitere vorteilhafte Ausführungsform der Erfindung sind Gegenstand der abhängigen Ansprüche.

Das erfindungsgemäße Formwerkzeug verfügt über wenigstens einen Schieber an einer Werkzeughälfte und umfasst zudem wenigstens eine in der Ebene der Werkzeughälfte translatorisch bewegbare Schubstange. Diese ist am Schieber angelenkt. Zudem ist eine Antriebsvorrichtung für ein im wesentlichen senkrecht zur Ebene der Werkzeughälfte verschiebbares Hubelement zum Ausformen eines Formteils vorgesehen. Das Formwerkzeug besitzt zudem eine zentrale Steuervorrichtung zur gemeinsamen Betätigung der Schubstange bzw. bei Verwendung mehrerer Schieber, der Schubstangen, und der Antriebsvorrichtung für das Hubelement. Die Antriebsvorrichtung kann im wesentlichen block- oder zylinderförmig ausgeformt sein. Das Hubelement bildet während des Formvorganges entweder einen Teil der Formhälfte oder ist unterhalb der Formhälfte angeordnet und wird erst im Zuge des Entformvorganges in die Auswurf- bzw. Hubstellung verschoben. Die Schieber können zusätzlich so ausgebildet sein, dass sie bei Erreichen der Endposition der translatorischen Verschiebung nach außen, d.h. vom Formteil weg, verschwenkt werden können, um die Ränder des Formteils, und somit letztlich das gesamte Formteil, vollständig freizulegen. Eine derartige Ausgestaltung bietet sich vor allem bei hinterschnittenen Formteilen an.

Zum Antrieb der zentralen Steuervorrichtung ist insbesondere ein Elektromotor oder ein Schrittmotor vorgesehen. Durch diese Ausgestaltung des Motors wird eine sehr genaue und direkte Steuerung des Schiebers bzw. der Schieber und gleichzeitig der Antriebsvorrichtung für das Hubelement möglich, da beide Werkzeugelemente an der gleichen Welle angeordnet und von dieser angetrieben werden. Die Tatsache, dass nur ein Antriebselement vorhanden ist und die Verwendung eines Elektromotors bietet außerdem die Möglichkeit, entsprechende Formwerkzeuge im Vergleich zu aufwändigen Hydraulik- oder Druckluftanlagen relativ kostengünstig herzustellen, mit niedrigen Kosten zu betreiben und mit wenig Aufwand instandzuhalten.

Eine bevorzugte Ausführungsform der vorliegenden Erfindung sieht vor, dass die Antriebsvorrichtung einen mit einer Steigkulisse versehenen Kulissenbock zur Zwangsführung des Hubelements aufweist. Das Hubelement steht dabei, beispielsweise über wenigstens einen Vorsprung an seiner vom Formnest abgewandten Seite, mit der Steigkulisse der Antriebsvorrichtung in Eingriff. Die rotatorische Bewegung der mit der angetriebenen Welle verbundenen Antriebsvorrichtung wird so in eine translatorische Bewegung des Hubelementes umgesetzt. Das Hubelement, das an dem aus dem Formnest zu entformenden Formteil anliegt, oder während des Entformens an dieses angelegt wird, hebt im weiteren Verlauf der Bewegung der Antriebsvorrichtung das Formteil sanft an und löst dieses dadurch kraftvoll aus der Formhälfte. Durch die erfindungsgemäße Vorrichtung, insbesondere in Verbindung mit einem Elektro- oder Schrittmotor, kann damit ein besonders sanftes, gut steuerbares und somit schadensfreies Losbrechen des Formteiles aus der Formhälfte erreicht werden.

Es erweist sich als vorteilhaft, wenn die Steuervorrichtung für die Schubstange(-n) als Kurvenscheibe ausgebildet ist. Die Scheibe weist dabei eine spiralförmig ausgebildete Kulissenführung auf, in die die zu verschiebende Schubstange eingreift. Dieser Eingriff wird insbesondere über einen stiftförmigen Vorsprung realisiert, der an der Schubstange vorgesehen ist. Die Kulissenführung verfügt über eine Nut oder eine Trommelkurve, bei Verwendung mehrerer Schubstangen über die entsprechende Anzahl von Nuten oder Trommelkurven. Die spiralige Anordnung der Kulissenführung bewirkt, dass sich beispielsweise während der Drehung der Scheibe um 180° im Uhrzeigersinn der radiale Abstand der durch die Kulisse geführten Schubstange(n) vom Mittelpunkt der Scheibe stetig vergrößert und dadurch eine translatorische, synchrone Verschiebung der Schubstange(-n) stattfindet. Bei Umkehr der Scheibendrehung wird die Schubstange bzw. werden die Schubstangen auf den Mittelpunkt zugeführt und die daran angelenkten Schieber entsprechend zum Zentrum hin bewegt.

Eine weiterhin bevorzugte Ausführungsform der vorliegenden Erfindung sieht vor, dass die Steuervorrichtung als die Schubstange verlängernder Lenker ausgebildet ist. Der Lenker (Hebel) ist dabei sowohl schubstangen- als auch scheibenseitig an der zentralen Antriebswelle schwenkbar gelagert. Die Drehung der Scheibe, insbesondere um 90° im bzw. gegen den Uhrzeigersinn bewirkt eine Verschwenkung des Lenkers, damit verbunden die translatorische Verschiebung der Schubstange und des Schiebers und damit das Erreichen der Arbeits- bzw. Entnahmeposition des Formwerkzeuges.

Als empfehlenswert wird angesehen, wenn die Steuervorrichtung als die Schubstange verlängernde, exzentrisch an einem Planetenrad angeordnete Lasche ausgebildet ist. Durch diese Ausbildung mit einem "Planetengetriebe" kann ein Elektromotor mit nur einer Drehrichtung zum Antrieb der Steuervorrichtung verbaut und dadurch das gesamte Formwerkzeug noch einfacher und kostengünstiger ausgeführt werden.

In einer bevorzugten Ausführungsform der vorliegenden Erfindung steht das Planetenrad kämmend mit einem Sonnenrad in Eingriff, das an der angetriebenen Welle angeordnet ist oder ist durch einen über die Welle laufenden Riemen oder eine Kette angetrieben. Hierdurch kann bei entsprechender Kapselung auf eine Schmierung des Getriebes weitgehend verzichtet werden.

Eine weitere vorteilhafte Ausführung der Erfindung sieht vor, dass bei Verwendung von mehr als einem Planetenrad, jedes weitere Planetenrad durch einen Riementrieb oder einen Kettentrieb angetrieben ist. Dabei empfiehlt es sich insbesondere, koaxial zum Planetenrad, das mit dem Sonnenrad kämmt bzw. durch die Welle über einen Riemen oder eine Ketten angetrieben ist, ein zweites Rad oder eine Rolle zur Führung des Riemen- oder Kettentriebes anzuordnen.

Um eine besonders stabile Führung der Schubstange zu gewährleisten und um die Schubstange gegen Verbiegen zu sichern, ist es besonders empfehlenswert, die Schubstange in einer nahe an der zentralen Steuervorrichtung angeordneten Führung zu führen. Als Führung kommen alle realisierbaren Möglichkeiten zur Linearführung einer Stange in Frage, vor allem jedoch eine offene Schiene, die die Schubstange umgreift oder ein Führungsblock, durch den die Schubstange hindurchgeführt wird.

Eine als besonders günstig anzusehende Ausführungsform der Erfindung sieht vor, dass vier Schubstangen rechtwinklig zueinander in Art eines Kreuzes angeordnet sind. Durch eine derartige Anordnung können vier Schieber einer Formwerkzeughälfte synchron bewegt werden, wodurch das Entformen geschäumter, umspritzter oder eingebetteter Formteile noch einfacher durchführbar wird. Außerdem kann durch diese Anordnung ein besonders gleichmäßiger Rundlauf des Antriebs und eine gleichmäßige Beanspruchung der zentralen Welle erreicht werden.

Weitere Vorteile, Merkmale und Besonderheiten der Erfindung ergeben sich aus der nachfolgenden Beschreibung bevorzugter, jedoch nicht beschränkender Ausführungsformen der Erfindung anhand der schematischen und nicht maßstabsgetreuen Zeichnungen. Es zeigen:
- Fig. 1: eine bevorzugte Ausführungsform des erfindungsgemäßen Formwerkzeuges in perspektivischer Darstellung,
- Fig. 2: eine bevorzugte Ausführungsform der mit einer Kurvenscheibe versehenen Steuerungsvorrichtung in Unteransicht,
- Fig. 3a: eine Ausführungsform der mit Lenkern (Hebeln) ausgestatteten Steuerungsvorrichtung in Unteransicht
- Fig. 3b: eine Darstellung der Steuervorrichtung der Fig. 3a mit verschwenkten Lenkern in Unteransicht,
- Fig. 4: eine weitere Ausführungsform der Steuerungsvorrichtung mit einem Planetengetriebe in Unteransicht, und
- Fig. 5: eine Ausführungsform der erfindungsgemäßen Steuerungsvorrichtung mit durch einen Riementrieb angetriebenen Planetenrädern in Unteransicht.

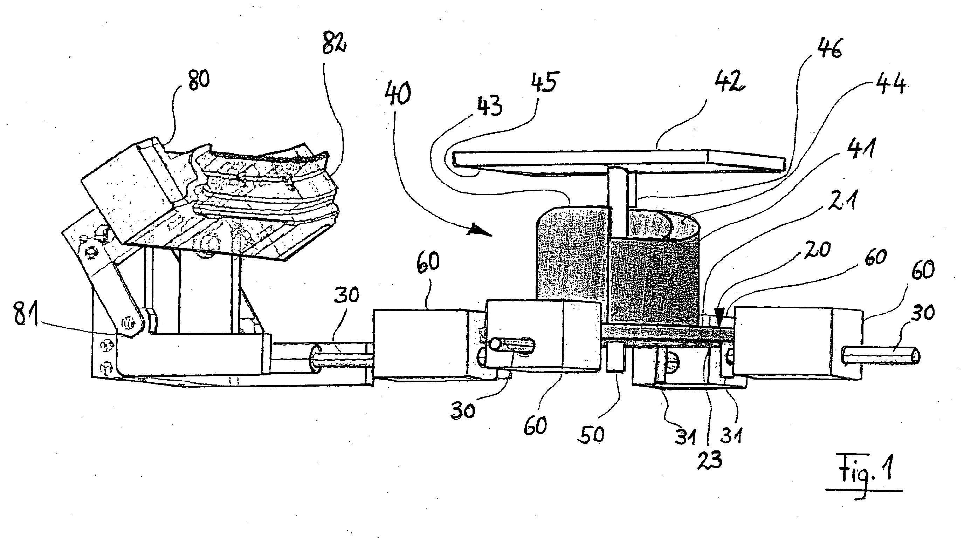

Fig. 1 zeigt das erfindungsgemäße Formwerkzeug, bei dem ein Schieber 80 in der Entnahmeposition des erfindungsgemäßen Formwerkzeuges dargestellt ist. Durch Drehung einer Kurvenscheibe 20 erfolgt eine translatorische Verschiebung der Schubstangen 30 und der mit diesen verbundenen Schiebern 80. Kurz vor Erreichen des Endpunktes der Verschiebung der Schubstangen 30 erfolgt über ein Gelenk 81, ein Verschwenken der Schieber 80, die dadurch das in den umlaufenden Lippen 82 gelagerte Formteil freigeben. Mit der Kurvenscheibe 20 stehen im Ausführungsbeispiel der Fig. 1 stiftförmige Vorsprünge 31 der Schubstangen 30 in Eingriff. Auf der Oberseite 21 der Kurvenscheibe 20 ist eine Antriebsvorrichtung 40 für ein tischartig ausgebildetes Hubelement 42 angeordnet. Die Antriebsvorrichtung 40 ist in Form eines Kulissenbockes 41 vorgesehen, wobei eine Steigkulisse 44 als dem Umfang folgende, ansteigende Kurve auf der dem Hubelement 42 zugewandten Seite 43 des Kulissenbockes 41 eingebracht ist. Das Hubelement 42 weist an seiner Unterseite 45 einen Stift 46 auf, der auf der Steigkulisse 44 läuft. Dadurch wird eine Verschiebung des Hubelementes 42 senkrecht zur Kurvenscheibe 20 bzw. zum Kulissenbock 41 erreicht.

Die Kurvenscheibe 20 und die Antriebvorrichtung 40 sind gemeinsam auf einer zentral angeordneten Welle 50 angebracht, über die beide Elemente angetrieben werden. Der Antrieb erfolgt durch einen am unteren Ende der Welle angeordneten Elektromotor (nicht dargestellt). Die Drehung der Welle 50 um ca. 160° im Uhrzeigersinn bewirkt im Ausführungsbeispiel der Fig. 1 eine Verschiebung der Schubstangen 30 und damit der Schieber 80, (in Fig. 1 wird aus Übersichtlichkeitsgründen nur einer dieser Schieber 80 dargestellt) nach außen, und damit in die Entnahmeposition des Formwerkzeuges. Gleichzeitig mit der Verschiebung der Schubstangen 30 erfolgt durch die Antriebsvorrichtung 40 eine Aufwärtsbewegung des Hubelementes 42. Durch Bewegung des Hubelementes 42 erfolgt das Losbrechen und Anheben des im Formnest gelagerten Formteils, dessen Entnahme nach Abschluss der Verschiebung des Hubelementes 42 schnell und einfach erfolgen kann.

Um die Form für die Aufnahme eines neuen Formteils vorzubereiten, erfolgt eine entsprechend entgegengesetzte Drehung der Welle 50 um 90° gegen den Uhrzeigersinn. Die über die stiftförmigen Vorsprünge 31 mit der Kurvenscheibe 20 in Eingriff stehenden Schubstangen 30 werden dadurch entgegengesetzt zur vorherigen Verschieberichtung verschoben und die Schieber 80 somit in Richtung der Welle 50 gezogen. Dadurch nimmt das Formwerkzeug seine Arbeitsposition ein. Während der Bewegung der Schieber 80 bzw. der Schubstangen 30 findet gleichzeitig ein Absenken des Hubelementes 42 statt. Dazu bewegen sich die Stifte 46 auf der Steigkulisse 44 in die zum Anheben entgegengesetzte Richtung, so dass das Hubelement 42 in die Ausgangsposition zurückgleiten kann. Die Schubstangen 30 sind durch die Führungsblöcke 60 hindurchgeführt, die unweit des Randes 23 der Kurvenscheibe 20 angeordnet sind. Diese Führungsblöcke 60 befinden sich im Bereich des Angriffspunktes der höchsten Verwindungskraft und gewährleisten so eine stabile Führung der Schubstangen 30.

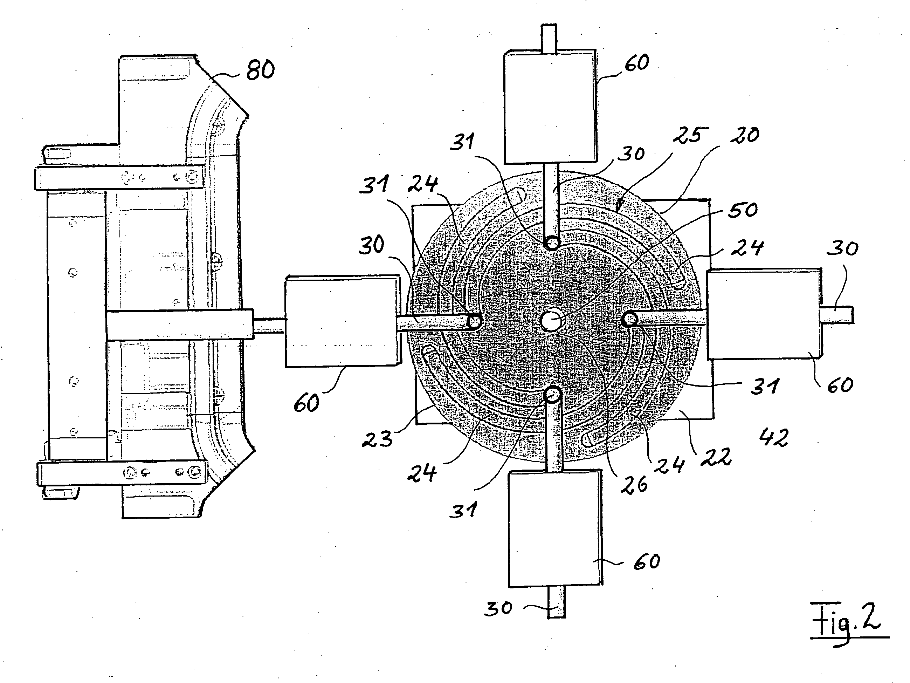

In Fig. 2 zeigt die Ausführungsform der erfindungsgemäßen Steuervorrichtung aus Fig. 1 in Unteransicht. Im Ausführungsbeispiel sind vier rechtwinklig zueinander angeordnete Schubstangen 30 vorgesehen. Die Schieber 80, von denen in Fig. 2 nur ein einziger gezeigt wird, befinden sich in der Arbeitsposition, d.h. das Formwerkzeug ist für die Aufnahme eines neuen Formteils vorbereitet. Die Kurvenscheibe 20 verfügt auf ihrer Unterseite 22 über spiralig in die Kurvenscheibe 20 eingeschnittene Nuten 24, die eine Kulissenführung 25 bilden. Die stiftförmigen Vorsprünge 31 der Schubstangen 30 befinden sich am der Welle 50 nächstgelegenen Punkt, d.h. am weitesten beabstandet zum Rand 23 der Kurvenscheibe 20. Über die stiftförmigen Vorsprünge 31 wurden somit auch die Schubstangen 30 und mit diesen die daran angelenkten Schieber 80 auf das Zentrum 26 der Kurvenscheibe 20 hin bewegt. Eine Drehung der Kurvenscheibe 20 um etwa 160° bewirkt eine durch die Kulissenführung 25 vermittelte Verschiebung der stiftförmigen Vorsprünge 31 in den Nuten 24. Diese bewegen sich spiralig, d.h. mit abnehmendem, radialem Abstand zum Rand 23 der Kurvenscheibe 20 in der Nut 24, wodurch eine translatorische Bewegung der Schubstangen 30 und der daran angelenkten Schieber 80 stattfindet und die Entnahmeposition des Formwerkzeuges eingenommen wird. Um eine Verbindung der Schubstangen 30 zu unterbinden, werden diese in Führungsblöcken 60 geführt. Die Führungsblöcke 60 weisen eine Tunnelführung zur Aufnahme der Schubstangen 30 auf. In Fig. 2 zu erkennen ist zudem das tischförmige Hubelement 40, das mit Drehung der Kurvenscheibe 20 senkrecht von dieser weg bewegt wird, dadurch ein im Formnest befindliches Formteil aus der Formhälfte losbricht und dem Werker bzw. der Entnahmevorrichtung entgegenhebt.

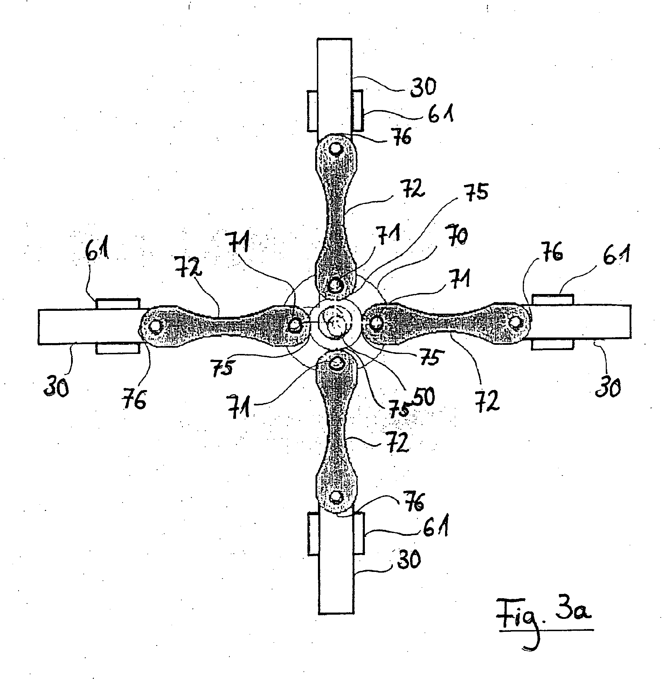

Fig. 3a zeigt eine weitere, bevorzugte Ausführungsform der erfindungsgemäßen Steuervorrichtung. Im Ausführungsbeispiel ist eine zentral von der Welle 50 durchdrungene Scheibe 70 vorgesehen, die über senkrecht zueinander angeordnete, vorspringende Stifte 71 verfügt. An diesen Stiften 71 ist ein Ende 75 jeweils eines Lenkers 72 angebracht, dessen entgegengesetztes Ende 76 an der Schubstange 30 angelenkt ist. Die Schubstange 30 ist im Ausführungsbeispiel der Fig. 3a leistenförmig ausgeführt, ihre Führung erfolgt dementsprechend in einer Schiene 61, die die Schubstange 30 umgreift.

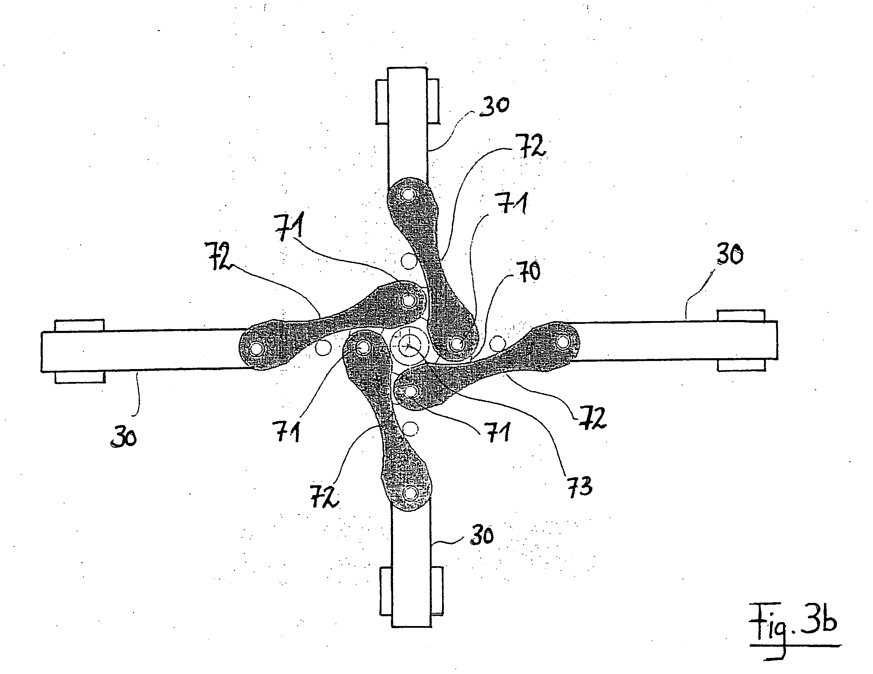

Fig. 3b zeigt die Steuervorrichtung aus Fig. 3a, jedoch ist hier die Scheibe 70 um 90° im Uhrzeigersinn gedreht dargestellt. Die an den Stiften 71 angebrachten Lenker 72 wurden aus der in Fig. 3a gezeigten Ausgangsposition, die gleichbedeutend mit der Entnahmeposition des Formwerkzeuges ist, in die Arbeitsposition verstellt. Dieser Positionswechsel wird durch Verschwenken der Lenker 72 bewirkt, wodurch sich der Abstand zwischen Schubstangen 30 und Scheibenmittelpunkt 73 verkürzt und die Schieber 80 (vgl. Fig. 1) entsprechend verschoben werden. Durch Umkehr der Drehrichtung des Antriebs und anschließender Drehung der Scheibe 70 um 90° gegen den Uhrzeigersinn erfolgt eine entgegengesetzte Verschwenkung der Lenker 72 und damit verbunden, eine Verschiebung der Schubstangen 30 vom Scheibenmittelpunkt 73 weg. Durch den vergrößerten Abstand zwischen Scheibenmittelpunkt 73 und Schubstangen 30 werden die Schieber 80 ebenfalls nach außen, von der Scheibe 70 weg, in die Entnahmeposition des Formwerkzeuges verschoben.

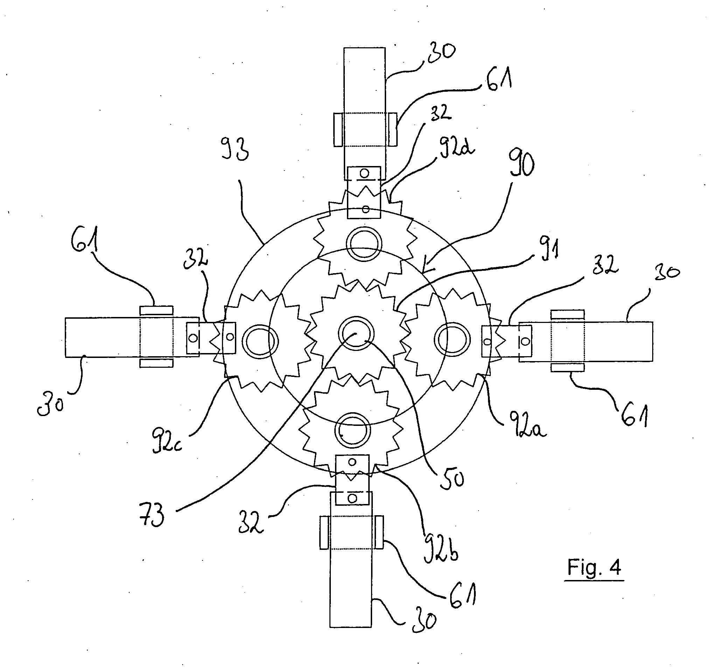

In Fig. 4 ist eine weitere bevorzugte Ausführungsform der erfindungsgemäßen Steuervorrichtung in Art eines Planetengetriebes 90 dargestellt. Dabei sind ein auf der Welle 50 angebrachtes Sonnenrad 91 und vier mit diesem in Eingriff stehende, nur schematisch dargestellte Planetenräder 92a bis 92d vorgesehen. Zusätzlich weist die erfindungsgemäße Steuervorrichtung eine um das Sonnenrad 91 herum angeordnete Führungsscheibe 93 für die Planetenräder 92a bis 92d auf. Im Ausführungsbeispiel der Fig. 4 werden die bandförmigen Schubstangen 30 durch daran angelenkte, begrenzt verschwenkbare Laschen 32 zum Scheibenmittelpunkt 73 hin verlängert. Die Schubstangen 30 werden auch im Ausführungsbeispiel der Fig. 4 in Schienen 61 geführt, die die Schubstangen 30 umgreifen, und jede der Laschen 32 ist exzentrisch an jeweils einem der Planetenräder 92a bis 92d anlenkt. Die mit dem Sonnenrad 91 kämmenden Planetenräder 92a bis 92d bewirken bei Drehung des Sonnenrades 91 somit laschenvermittelt eine Verkürzung bzw. Verlängerung des Abstandes zwischen Schubstange 30 und Scheibenmittelpunkt 73, wodurch eine Verschiebung der Schieber 80 (vgl. Fig. 1) in die Arbeits- bzw. Entnahmeposition des Formwerkzeuges erreicht wird. In der gezeigten Ausführungsform ist die Steuervorrichtung nur in eine Richtung drehbar ausgeführt und verfügt dementsprechend über eine Antriebsvorrichtung 40 mit entsprechend abgestimmter Steigkulisse 44 (vgl. Fig. 1).

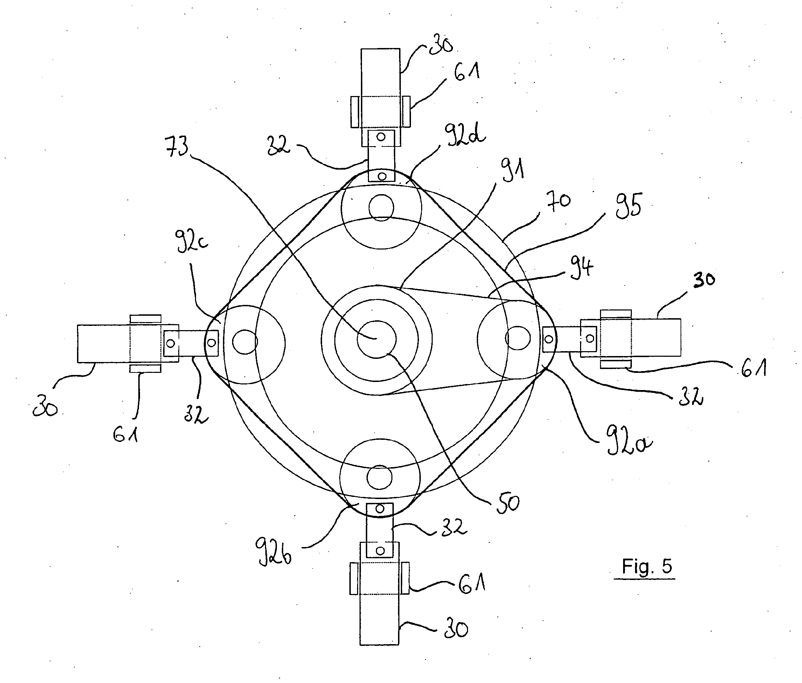

Fig. 5 zeigt ebenfalls die Unteransicht einer weiteren Ausführungsform der erfindungsgemäßen Steuervorrichtung. Hierbei ist, ähnlich wie bereits in Fig. 4 dargestellt, eine Scheibe 70 auf einer Welle 50 vorgesehen, mit der ein konzentrisch angeordnetes Sonnenrad 91 fest verbunden ist. Das Sonnenrad 91 treibt über einen umlaufenden Riemen 94 ein Planetenrad 92a. Am angetriebenen Planetenrad 92a ist exzentrisch eine Lasche 32 angelenkt, die mit der Schubstange 30 in Eingriff steht. Die Schubstange30 ist im Ausführungsbeispiel leistenförmig ausgebildet und wird in einer Schiene 61 geführt, um bei der Betätigung auftretende Verbiegung der Schubstange 30 zu verhindern und um deren gleichmäßige, translatorische Bewegung sicherzustellen. Deckungsgleich mit dem Planetenrad 92a ist eine Rolle angebracht, in der ein Riementrieb 95 geführt wird, der die übrigen Planetenräder 92b bis 92d antreibt. Jedes der Planetenräder 92b bis 92d weist eine exzentrisch angelenkte Lasche 32 in Verlängerung der Schubstange 30 auf. Durch die Rotation des Sonnenrades 91 erfolgt somit eine Drehung der Planetenräder 92a bis 92d und dadurch, je nach erreichter Stellung der Planetenräder 92a bis 92d eine Verkürzung bzw. Verlängerung des Abstandes zwischen Schubstange 30 und Scheibenmittelpunkt 73 und damit verbunden eine Verschiebung des Schiebers 80 (vgl. Fig. 1) in die Entnahme- bzw. Arbeitsposition des Formwerkzeuges.

### Bezugszeichenliste:

20 = Kurvenscheibe
21 = Oberseite
22 = Unterseite
23 = Rand
24 = Nut
25 = Kulissenführung
26 = Zentrum
30 = Schubstange(-n)
31 = stiftförmigen Vorsprünge
32 = Laschen
40 = Antriebsvorrichtung
41 = Kulissenbock
42 = Hubelement
43 = zugewandte Seite
44 = Steigkulisse
45 = Unterseite
46 = Stifte
50 = Welle
60 = Führungsblöcke
61 = Schiene
70 = Scheibe
71 = Stifte
72 = Lenker
73 = Scheibenmittelpunkt
75 = Ende
76 = entgegengesetztes Ende
80 = Schieber
90 = Planetengetriebe
91 = Sonnenrad
92a - d= Planetenrad
93 = Führungsscheibe
94 = Riemen
95 = Riementrieb

## Patentansprüche

1. Formwerkzeug mit wenigstens einem Schieber (80) an einer Werkzeughälfte, umfassend:
- wenigstens eine in der Ebene der Werkzeughälfte translatorisch bewegbare Schubstange (30), die am Schieber (80) angelenkt ist,
- eine Antriebsvorrichtung (40) für ein im wesentlichen senkrecht verschiebbares Hubelement (42) zum Ausformen eines Formteils, und
- eine zentrale Steuervorrichtung zur gemeinsamen Betätigung der Schubstange(n) (30) und der Antriebsvorrichtung (40),
**dadurch gekennzeichnet, dass**
die Steuervorrichtung eine rotatorische in eine translatorische Bewegung umsetzt und das Hubelement (42) im wesentlichen rechtwinklig zur Schubstange (30) angeordnet ist.

2. Formwerkzeug nach Anspruch 1,
**dadurch gekennzeichnet, dass**
die Steuervorrichtung durch einen einzigen Motor, insbesondere einen Elektro- oder Schrittmotor angetrieben ist.

3. Formwerkzeug nach Anspruch 1 oder 2,
**dadurch gekennzeichnet, dass**
die Antriebsvorrichtung (40) einen mit einer Steigkulisse (44) versehenen Kulissenbock (41) zur Zwangsführung des Hubelements (42) aufweist.

4. Formwerkzeug nach einem der vorhergehenden Ansprüche,
**dadurch gekennzeichnet, dass**
die Steuervorrichtung als Kurvenscheibe (20) ausgebildet ist, in deren spiralförmig angeordnete Kulissenführung (25) die Schubstange (30) eingreift, insbesondere über einen stiftförmigen Vorsprung (31).

5. Formwerkzeug nach einem der Ansprüche 1 bis 3,
**dadurch gekennzeichnet, dass**
die Steuervorrichtung als die Schubstange (30) verlängernder Lenker (72) ausgebildet ist.

6. Formwerkzeug nach einem der Ansprüche 1 bis 3,
**dadurch gekennzeichnet, dass**
die Steuervorrichtung als die Schubstange (30) verlängernde, exzentrisch an einem Planetenrad (92a) angeordnete Lasche (32) ausgebildet ist.

7. Formwerkzeug nach Anspruch 6,
**dadurch gekennzeichnet, dass**
das Planetenrad (92a) kämmend mit einem Sonnenrad (91) in Eingriff steht oder durch einen Riemen (94) oder eine Kette angetrieben ist.

8. Formwerkzeug nach Anspruch 7,
**dadurch gekennzeichnet, dass**
bei Verwendung von mehr als einem Planetenrad (92a), jedes weitere Planetenrad (92b-d) durch einen Riementrieb (95) oder einen Kettentrieb angetrieben ist.

9. Formwerkzeug nach einem der vorhergehenden Ansprüche,
**dadurch gekennzeichnet, dass**,
die Schubstange (30) in einer nahe an der zentralen Steuervorrichtung angeordneten Führung (60) geführt ist.

10. Formwerkzeug nach einem der vorhergehenden Ansprüche,
**dadurch gekennzeichnet, dass**,
vier Schubstangen (30) rechtwinklig zueinander angeordnet sind.

## Claims

1. Moulding tool with at least one slide (80) at a tool half, comprising:
- at least one push rod (30) being translationally movable in the plane of the tool half and articulated at the slide (80),
- a drive device (40) for a lifting element (42) being substantially vertically displaceable for de-moulding of a moulded part, and
- a central control device for common operation of the push rod(-s) (30) and the drive device (40), **characterized in that**
the control device transfers a rotational movement into a translational one und the lifting element (42) is arranged substantially perpendicular to the push rod (3).

2. Moulding tool according to claim 1, **characterized in that** the control device is driven by a single motor, in particular an electric motor or stepper motor.

3. Moulding tool according to claim 1 or 2, **characterized in that** the drive device (40) has a crank block (41) provided with a stile (44) for positive guidance of the lifting element (42).

4. Moulding tool according to one of the preceding claims, **characterized in that** the control device is designed as a cam disc (20) having a spirally arranged link guide (25) engaging with the push rod (30), in particular via a pin-shaped projection (31).

5. Moulding tool according to one of claims 1 to 3, **characterized in that** the control device is formed as a bar (72) extending the push rod (30).

6. Moulding tool according to one of claims 1 to 3, **characterized in that** the control device is formed as a tab (32) extending the push rod (30) and being eccentrically arranged on a planetary gear (92a).

7. Moulding tool according to claim 6, **characterized in that** the planetary gear (92a) is meshingly engaged with a sun gear (91) or driven by a belt (94) or a chain.

8. Moulding tool according to claim 7, **characterized in that** on using more than one planetary gear (92a), each further planetary gear (92b-d) is driven by a belt drive (95) or a chain drive.

9. Moulding tool according to one of the preceding claims, **characterized in that** the push rod (30) is guided in a guide (60) arranged close to the central control device.

10. Moulding tool according to one of the preceding claims, **characterized in that** four push rods (30) are arranged at right angles to each other.

## Revendications

1. Outil de moulage muni d'au moins un coulisseau (80) sur une moitié d'outil, comprenant :
- au moins une tige de poussée (30), mobile en translation dans le plan de ladite moitié d'outil et articulée sur ledit coulisseau (80),
- un dispositif d'entraînement (40) affecté à un élément de levage (42) apte à coulisser pour l'essentiel verticalement, en vue du démoulage d'une pièce moulée, et
- un dispositif central de commande, dévolu à l'actionnement commun de la (des) tige(s) de poussée (30) et du dispositif d'entraînement (40),
**caractérisé par le fait que**
le dispositif de commande convertit un mouvement rotatoire en un mouvement translatoire,
et l'élément de levage (42) peut être mû, pour l'essentiel, perpendiculairement à la tige de poussée (30).

2. Outil de moulage selon la revendication 1,
**caractérisé par le fait que**
le dispositif de commande est entraîné par un moteur unique, notamment par un moteur électrique ou un moteur pas à pas.

3. Outil de moulage selon la revendication 1 ou 2,
**caractérisé par le fait que**
le dispositif d'entraînement (40) comporte une colonne spiralée (41) dotée d'une coulisse ascendante (44), en vue du guidage forcé de l'élément de levage (42).

4. Outil de moulage selon l'une des revendications précédentes,
**caractérisé par le fait que**
le dispositif de commande est réalisé en tant que disque (20) à cames, dans le guide coulissant (25) à agencement spiroïdal duquel la tige de poussée (30) pénètre, en particulier, par l'intermédiaire d'une saillie (31) en forme de téton.

5. Outil de moulage selon l'une des revendications 1 à 3,
**caractérisé par le fait que**
le dispositif de commande est réalisé en tant que biellette (72) prolongeant la tige de poussée (30).

6. Outil de moulage selon l'une des revendications 1 à 3,
**caractérisé par le fait que**
le dispositif de commande est réalisé en tant que patte (32) prolongeant la tige de poussée (30) et occupant une position excentrée sur un pignon satellite (92a).

7. Outil de moulage selon la revendication 6,
**caractérisé par le fait que**
le pignon satellite (92a) est en prise d'engrènement avec une roue planétaire (91), ou est entraîné par l'intermédiaire d'une courroie (94) ou d'une chaîne.

8. Outil de moulage selon la revendication 7,
**caractérisé par le fait que**,
dans le cas d'une utilisation de plus d'un pignon satellite (92a), chaque pignon satellite supplémentaire (92b-d) est mené par un entraînement à courroie (95) ou par un entraînement à chaîne.

9. Outil de moulage selon l'une des revendications précédentes,
**caractérisé par le fait que**
la tige de poussée (30) est guidée dans un guide placé à proximité du dispositif central de commande.

10. Outil de moulage selon l'une des revendications précédentes,
**caractérisé par le fait que**
quatre tiges de poussée (30) sont agencées à angle droit les unes par rapport aux autres.
